# EUROPÄISCHE PATENTSCHRIFT

(11) **EP 0 558 891 B1**
(45) Veröffentlichungstag und Bekanntmachung des Hinweises auf die Patenterteilung: **28.06.1995**
(21) Anmeldenummer: 93100448.5
(22) Anmeldetag: 14.01.1993
(51) Int. Cl.: F26B 15/16, B28B 11/00, F27B 9/02

(54) **Verfahren zum Trocknen von Keramikwaren**
Process for drying ceramic articles
Procédé pour le séchage d'articles céramiques

(30) Priorität: 03.03.1992 DE 4206610
(43) Veröffentlichungstag der Anmeldung: 08.09.1993
(73) Patentinhaber: Hans Lingl Anlagenbau und Verfahrenstechnik GmbH & Co. KG, D-89231 Neu-Ulm (DE)
(72) Erfinder: Wolf, Eberhard, W-8908 Krumbach (DE)

(56) Entgegenhaltungen:
- DE-A- 2 448 523
- DE-A- 2 519 180
- FR-A- 486 845
- FR-A- 2 672 971

## Beschreibung

Die Erfindung betrifft ein Verfahren zum Trocknen von Keramikwaren gemäß dem Oberbegriff des Anspruchs 1. Ein derartiges Verfahren ist, zum Beispiel, aus der DE-B-24 48 523 bekannt.

In Trocknern mit feststehenden Luftumwälzgeräten wird zwischen den Produktionsschichten oder sonstigen Betriebsunterbrechungen, in welchen der Trockner weder weiter beschickt noch entleert wird, die den Umwälzgeräten jeweils nächstliegende Ware wesentlich stärker belüftet als die entfernter liegende Ware. Das hat zur Folge, daß bei Unterbrechungen die im Trockner sich befindende Ware ungleichmäßig getrocknet wird. Ein Abstellen der Luftumwälzgeräte hätte fatale Folgen, da der Trocknungsvorgang in unkontrollierter Weise abgebrochen würde.

Zweck der Erfindung ist es, diesem Mangel der Belüftung der Keramikware bei Betriebsunterbrechungen abzuhelfen.

Aus der DE-AS 25 19 180 ist eine Anlage zum Trocknen von Keramikwaren bekannt, bei der zur Überbrückung von Betriebsunterbrechungen vor und hinter dem Trockner eine Deponierung der Ware in einem Speicher erfolgt. Dadurch wirken sich zwar Betriebsunterbrechungen, bedingt durch die Arbeitszeitregelung oder andere Umstände auf den Warendurchsatz nicht ungünstig aus, die Anlage ist aber wegen des Speichers und der zusätzlichen Transportwege zu und von dem Speicher sehr raumaufwendig und teuer.

Eine alternative Möglichkeit, die zu trocknende Ware in Intervallen unterschiedlichen Bedingungen durch die Luftumwälzung im Trockner auszusetzen ist, die Umwälzgeräte fahrbar zu gestalten und zwischen dem Besatz im Trockner hin- und herzubewegen. Dies macht jedoch notwendig, Fahrantriebe und andere mechanische Teile der Luftumwälzgeräte direkt innerhalb des Trockners zu verlegen, was wegen der hohen Temperatur und der Feuchtigkeit in diesem die Umwälzgeräte störanfällig macht und die Wartung erheblich erschwert.

Aus der oben genannten DE-AS 24 48 523 ist ein Trockner mit zwei parallelen Trocknerwagenzügen bekannt, die von der Trocknereinfahrt zur Trocknerausfahrt durch einen U-förmig abgewinkelten Trockenkanal bewegt werden. Um auch bei diskontinuierlichem Betrieb des Trockners vorteilhafte Betriebsbedingungen zu erreichen, sind die Luftdurchsatzmenge und ihre Temperatur regelbar. Das Problem, daß das Trockengut bei Betriebsunterbrechungen in Abhängigkeit von der Relativposition zu den Lüftern unterschiedlich stark getrocknet wird, wird mit einem derartigen Trockner jedoch nicht gelöst.

Aufgabe der Erfindung ist es, ein Verfahren aufzuzeigen durch welche die zu trocknende Ware auch in Betriebspausen den gleichen Trocknungsbedingungen ausgesetzt ist wie während des Betriebes, ohne daß dazu aufwendige Zwischenspeicher erforderlich sind oder die Luftumwälzgeräte bewegt werden müssen.

Diese Aufgabe wird erfindungsgemäß mit dem im Anspruch 1 angegebenen Verfahren gelöst.

Mit der Erfindung wird bei Betriebsunterbrechungen, gleich welcher Art, die gesamte im Trockner sich befindende Keramikware rhythmisch unterschiedlich und damit in gleichem Umfang mit Luft beaufschlagt, wobei die Luftumwälzgeräte auch extern angeordnet sein können. Dies mindert deren Störanfälligkeit und erleichtert deren Wartung.

Nachstehend werden zwei in der Zeichnung dargestellte Ausführungsbeispiele des Trockners beschrieben. Es zeigen
Figuren 1 und 2 schematisch eine Draufsicht auf einen Durchlauftrockner mit innenliegenden Schiebebühnen;
Figur 3 schematisch eine Draufsicht auf einen Durchlauf- bzw. Kammertrockner mit extern angebrachten Schiebebühnen.

In einem Trockner befinden sich mehrere, aus einzelnen Trockenwagen 2 bestehende Wagenzüge 2′. Die Wagenzüge laufen auf parallel nebeneinander angeordneten Gleisen I bis IV. Zwischen je zwei Wagenzügen 2′ sind Gänge 3 für eine Reihe fest eingebauter um eine vertikale Achse drehender Luftumwälzgeräte 4 frei gelassen. Es ist für das Verfahren nicht von Bedeutung, ob diese Lüfter 4 in den Gängen 3 des Trockners 1 angeordnet sind oder ob die Lüfter 4 außerhalb des Trockners liegen, solange gesichert ist, daß die Luft quer zu den Wagenzügen 2′ umgewälzt wird.

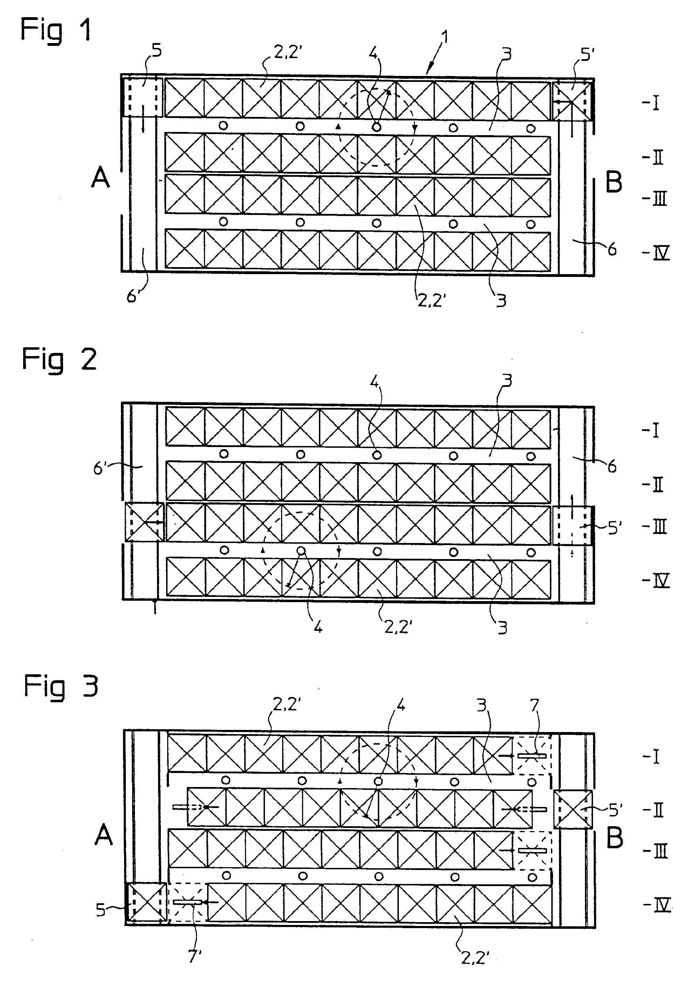

Während des Betriebes wird der Trockner 1 an der Seite A gefüllt und an der Seite B entleert, wobei die Wagen 2 mittels Schiebebühnen 5, 5′ in einem Raum 6, 6′ (Fig. 1 und 2) innerhalb des Trockners oder außerhalb des Trockners liegenden Schiebebühnen 5, 5′ (Fig. 3) auf die einzelnen Wagenzüge 2′ verteilt werden.

Die Wagenzüge 2′ bewegen sich durch das Beschicken des Trockners und das Entleeren des Trockners im Befüllungs- bzw. Entleerungsrhythmus an den Lüftern vorbei, wodurch eine Beaufschlagung der Ware auf den Wagen im Wechsel zwischen intensiver und weniger intensiver Beaufschlagung bewirkt wird.

Bei Betriebsunterbrechungen, zum Beispiel Produktionspausen, erfolgt keine Bewegung der Wagen in Durchschubrichtung. Damit die Ware auf den Wagen trotzdem im Wechsel intensiverer und weniger intensiver Beaufschlagung ausgesetzt wird, wird in stetigem Wechsel der äußerste Wagen eines Wagenzuges entnommen und an derselben Seite einem anderen Wagenzug zugeführt. Wie zum Beispiel aus Figur 1 ersichtlich ist, bewirkt die Verschiebung eines Wagenzuges 2′ um eine Position in Längsrichtung, daß die Wagen direkt neben einem Lüfter 4 in die Zwischenposition bewegt werden und umgekehrt.

Dazu wird z. B. mit der Schiebebühne 5 (Fig. 1) ein Wagen 2 in das Gleis I eingeschoben und gleichzeitig durch die gegenüberliegende Schiebebühne 5′ ein Wagen 2 vom Gleis I entnommen, der anschließend in eines der parallelen Gleise II bis IV eingeschoben wird, wobei der jeweils gegenüberliegende Wagen 2 durch die Schiebebühne 5 auf ein anderes Gleis I bis IV umgesetzt wird, so daß die jeweils letzten Wagen auf den Gleisen im Wechsel auf einem anderen Gleis zu stehen kommen. Die Wagen werden also quer zur Trocknerdurchschubrichtung miteinander ausgetauscht, nicht aber in Längsrichtung, um so das Klima in Längsrichtung des Trockners nicht zu stören.

Dies ist in einem Durchlauftrockner durchführbar, aber auch in einem mit Wagen 2 beschickten Kammertrockner mit außenliegenden Schiebebühnen 5, 5′ mit dem Unterschied, daß beim Kammertrockner an den Gleisenden zusätzlich Transporteure 7, 7′ vorgesehen sein müssen und jeweils ein Gleisende im Wechsel freigeschoben wird.

## Patentansprüche

1. Verfahren zum Trocknen von Keramikwaren, wobei die Waren in einem Trockner auf Wagen in wenigstens zwei parallelen Wagenzügen von einer Einfahrseite (A) zu einer Ausfahrseite (B) bewegt und durch ortsfeste Lüfter beaufschlagt werden, **dadurch gekennzeichnet**, daß bei Betriebsunterbrechungen des Trockners an der Einfahrseite (A) und/oder der Ausfahrseite (B) des Trockners der äußerste Wagen eines Wagenzuges entnommen und auf derselben Seite des Trockners einem anderen Wagenzug zugeführt wird, wobei die Wagen der Wagenzüge innerhalb des Trockners in ihrer Position in stetigem Wechsel relativ zu den Lüftern versetzt werden.

## Claims

1. A process for drying ceramic articles, whereby the articles are moved in a dryer on cars in at least two parallel car trains from an entrance side (A) to an exit side (B) and are acted upon by stationary fans, characterized by that in the event of breakdowns of the dryer the car at the extreme ends of the entrance side (A) and/or the exit side (B) of the dryer is transferred from the car train and moved to another car train at the same side of the dryer, whereby the cars of the car trains within the dryer are continually repositioned relative to the fans.

## Revendications

1. Procédé pour le séchage d'articles céramiques, les articles étant déplacés dans le séchoir sur des chariots en deux trains de chariots parallèles au minimum, d'un côté d'entrée (A) à un côté de sortie (B) étant séchés par des soufflantes stationnaires, caractérisé en ce que lors d'interruptions de service du séchoir le chariot d'extrémité d'un train de chariots est prélevé du côté d'entrée (A) et/ou du côté de sortie (B) du séchoir et amené à un autre train de chariots au même côté du séchoir, la position des chariots des trains de chariots à l'intérieur du séchoir est déplacé en permanence en mouvements relatifs par rapport aux soufflantes.
